# EUROPÄISCHE PATENTSCHRIFT

(11) **EP 4 082 407 B1**
(45) Veröffentlichungstag und Bekanntmachung des Hinweises auf die Patenterteilung: **26.06.2024**
(21) Anmeldenummer: 22164252.3
(22) Anmeldetag: 25.03.2022
(51) Int. Cl.: A47J 31/44, A47J 31/60

(54) **GETRÄNKEBEREITER MIT SENSORVORRICHTUNG**
BEVERAGE PREPARER WITH SENSOR DEVICE
PRÉPARATEUR DE BOISSONS POURVU DE DISPOSITIF CAPTEUR

(30) Priorität: 26.04.2021 DE 102021110535
(43) Veröffentlichungstag der Anmeldung: 02.11.2022
(73) Patentinhaber: Miele & Cie. KG, 33332 Gütersloh (DE)
(72) Erfinder: Tembaak, Jutta, 49492 Westerkappeln (DE); Last, Mario, 33739 Bielefeld (DE)

(56) Entgegenhaltungen:
- CN-B- 106 510 492
- DE-A1-102018 112 304
- DE-B4-102011 081 703
- JP-A- 2005 350 078
- US-A1- 2020 178 725

## Beschreibung

Die Erfindung betrifft einen Getränkebereiter, umfassend
- einen Korpus;
- ein im Korpus angeordnetes Fluidsystem, welches folgende Komponenten umfasst:
- eine Wasserquelle, beispielsweise einen Tank, und eine Zuführleitung zum Zuführen des Wasser in das Fluidsystem;
- eine Brühvorrichtung zur Aufnahme einer Trockensubstanz, welche zur Zubereitung des Getränks mit dem Wasser durchströmt werden kann;
- eine Auslassvorrichtung zur Ausgabe des zubereiteten Getränks;
wobei der Getränkebereiter eine Steuereinrichtung zur Steuerung des Fluidsystems zur Zubereitung eines Getränks.

Aus der DE 10 2018 112 304 A1 ist ein Getränkebereiter mit einem entsprechendem Fluidsystem mit einer als Wassertank ausgeführten Wasserquelle. Hierbei wird der Zeitpunkt erfasst, wann der Wassertank eingesetzt wird. Hierbei wird die Zeit gemessen, in der der Wassertank im Gerät verbleibt, ab. Wenn eine vorbestimmte Zeit abgelaufen ist, wird der Benutzer aufgefordert, den Tank mit frischem Wasser zu befüllen.

In der DE 10 2011 081703 B4 ist ein Haushaltsgerät mit einem Durchlauferhitzer definiert, der eine Sensoranordnung zur Erfassung des Härtegrades von Wasser umfasst.

Der Erfindung liegt somit die Aufgabe zugrunde, die Hygieneeigenschaften für hinsichtlich des zugeführten Wassers für einen Getränkebereiter zu verbessern.

Erfindungsgemäß wird unter anderem diese Aufgabe durch einen Getränkebereiter mit den Merkmalen des unabhängigen Anspruchs 1 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen darin, dass die gute Qualität der Getränke durch gutes Frischwasser sichergestellt wird. Ferner wird insgesamt die Hygiene im Leitungssystem des Bereiters verbessert, weil insbesondere vermieden wird, dass verkeimtes Wasser zur Zubereitung in das Leitungssystem eingelassen wird.

Hierzu umfasst der Getränkebereiter eine Sensorvorrichtung mit einem Sensormittel und ein Auswertemittel, wobei die Sensorvorrichtung dazu eingerichtet ist, einen chemischen Inhaltsstoff im Wasser zu erfassen, wobei die Steuereinrichtung mit der Sensorvorrichtung in Verbindung steht. Als chemische Beimengungen werden insbesondere Zusammensetzungen bezeichnet, die aufgrund von Verkeimungen entstehen. Dies können Umwandlungsprodukte oder Ausscheidungen von Keimen sein. Bei der hier und nachfolgend beschriebenen Sensorvorrichtung handelt es sich um einen elektrochemischen Sensor.

Erfindungsgemäß ist das Sensormittel in Zuführleitung in räumlicher Nähe, bevorzugt in unmittelbarer Nähe zur Wasserquelle bzw. Tank angeordnet oder angebracht. Dadurch kann auf einfache Weise das im Tank bevorratete Wasser hinsichtlich Verkeimung überwacht werden, ohne dass direkt im Tank ein Sensormittel angebracht ist. Der Tank ist entnehmbar konzipiert und kann dadurch zum Befüllen weiterhin aus dem Gerät herausgenommen werden, wobei das Sensormittel im Anschlussstutzen im Gerät verbleibt.

In einer vorteilhaften Ausführung besitzt das Sensormittel eine Messkammer mit zumindest eine Elektrode zur Messung einer elektrischen Eigenschaft des Wassers, bevorzugt den Leitwert, Impedanz oder die elektrische Stromstärke zwischen der Elektrode und einem Bezugspotential, wobei das Auswertemittel dazu ausgebildet ist, den chemischen Inhaltsstoff anhand der gemessenen elektrischen Eigenschaft zu bestimmen und der Steuereinrichtung zuzuführen. Die Messkammer kann auch ein Leitungsabschnitt im Strömungsleitungssystem sein, in dem die Elektroden angeordnet sind und in dem die entsprechende Erfassung des chemischen Inhaltsstoffs stattfindet.

In einer insgesamt vorteilhaften Ausführung umfasst das Sensormittel innerhalb der Messkammer zumindest zwei aktive Elektroden zur Bereitstellung eines elektrischen Stromes durch die Flüssigkeit, um eine chemische Umwandlung des chemischen Inhaltsstoffs im Wasser bewirken zu können. Damit wird eine elektrochemische Zelle, auch chemischer Reaktor genannt, bereitgestellt, der die Umwandlung des chemischen Inhaltsstoffs bzw. der Stoffwechselprodukte von Keimen in einen zweiten chemischen Inhaltsstoff bewirkt, wobei der zweite chemische Inhaltsstoff mit den bereits genannten Mitteln schnell und eindeutig nachweisbar ist. Mit dem Messergebnis kann wiederrum der Grad oder die Höhe der Verkeimung bewertet werden. Eine quantitative Bewertung der Verkeimung kann somit bereitgestellt werden.

In einer bevorzugten Weiterbildung ist das Auswertemittel dazu eingerichtet, für eine erste vorbestimmte Zeit die aktiven Elektroden zu aktivieren, um eine chemische Umwandlung des chemischen Inhaltsstoffs zu bewirken, und die elektrische Eigenschaft des Wassers während oder nach der chemischen Umwandlung mittels der Messelektrode zu erfassen. Alternativ oder in Kombination kann die Erfassung des Anteils auch stattfinden, während die aktiven Elektroden aktiviert sind, also während der chemische Umwandlung. Dadurch kann das dynamische Verhalten der chemischen Umwandlung erfasst werden, welches wiederrum den Anteil des ersten chemischen Inhaltsstoffs und damit den Grad der Verkeimung angibt. Eine schnelle Umwandlung zeigt einen hohen Anteil an dem besagten chemischen Inhaltsstoff und eine langsame oder träge Umwandlung einen geringeren oder geringen Anteil.

In einer bevorzugten Ausführung bestehen die aktiven Elektroden zur Bereitstellung des elektrischen Stromes zwischen den Elektroden aus Platten, die beabstandet zueinander in der Messkammer angeordnet sind und wobei die Messelektrode im Raum zwischen den beiden aktiven Elektroden angeordnet ist. Die Platten sind dabei derart zueinander positioniert, dass ein Raum zwischen den Plattenflächen bereitgestellt wird, in dem sich die zu messende Flüssigkeit befindet. Die Messelektrode befindet sich in diesem Raum oder am Rand. Idealerweise wird diese an den aktiven Elektroden angelegte Spannung Mit Hilfe der an der Messelektrode erfassten elektrischen Eigenschaft der Flüssigkeit geregelt bzw. gesteuert.

In einer zweckmäßigen Weiterbildung sind die Platten parallel beabstandet zueinander angeordnet.

In einer anderen Ausführung der ist das Sensormittel als rohrförmiger Hohlkörper mit segmentiertem Mantel ausgebildet, wobei zumindest zwei Segmente als aktive Elektroden und bevorzugt zumindest ein Segment als Messelektrode fungieren. Dadurch wird bei kompakter Baugröße ein optimales Volumen der Messkammer bereitgestellt. Die Messelektrode kann auch in das Innere der Messkammer zwischen den aktiven Elektroden platziert sein. Damit kann das als Rohrstück ausgebildete Sensormittel zwischen Wassertank und Zuführleitung aufgesetzt oder integriert werden, wobei die Strömung nicht oder nur geringfügig beeinflusst wird.

In einer insgesamt zweckmäßigen Ausführung ist die Sensorvorrichtung dazu eingerichtet, den Nitratgehalt im Wasser zu erfassen. Für die Ausführung mit aktiven Elektroden wird dabei, sobald im Wasser enthalten, Nitrit zu Nitrat umgewandelt, wobei der Nitratgehalt mittels der bereits genannten elektrischen Eigenschaften erfasst werden kann, der wiederrum proportional zum Nitritgehalt ist.

In einer vorteilhaften Ausführung ist das Auswertemittel dazu eingerichtet, die Aktor-Elektroden vorbestimmte Dauer, bevorzugt 1 bis 60 Sekunden, bevorzugt 5 bis 40 Sekunden, besonders bevorzugt 5 bis 30 Sekunden, zu aktivieren, um Nitrit in Nitrat umzuwandeln, um mittels der Messelektrode die elektrische Eigenschaft des mit der Umwandlungssubstanz versehene Wasser bzw. nitrathaltigen Wassers zu erfassen.

In einer insgesamt vorteilhaften Ausführung umfasst das Auswertemittel eine Tabelle, ein mathematisches Modell oder eine Umrechnungsformel zur Bestimmung des chemischen Inhaltsstoffs, bevorzugt des Nitratwertes, basierend auf der vom Sensormittels erfassten elektrischen Eigenschaft. Also hierbei wird die Menge bzw. der Anteil der Umwandlungssubstanz im Wasser der Wasserquelle aufgrund der elektrischen Eigenschaft ermittelt. Ferner kann mittels einer der vorstehend genannten Maßnahmen der Anteil der ursprünglichen chemischen Beimengung und daraus ein Wert für die Verkeimung ermittelt werden. Für alle Ausführungen kann das Auswertemittel als Rechnereinheit mit einem Mikrocontroller ausgebildet sein, wobei die Tabelle, das mathematische Modell oder die Umrechnungsformel als Programmcode, bevorzugt veränderbarer Programmcode, implementiert ist. Die genannte Funktion kann auch in der Steuereinrichtung implementiert sein, sodass der Mikrocontroller der Steuereinrichtung diese Aufgaben mit übernimmt und kein zusätzlicher Mikrocontroller eingesetzt werden muss.

In einer weiteren, insgesamt vorteilhaften Ausführung ist das Auswertemittel dazu eingerichtet bzw. programmiert, die Dynamik, also Größe der Veränderung der elektrischen Größe innerhalb eines vorbestimmten Zeitabschnitts, bevorzugt 1 bis 60 Sekunden, bevorzugt 5 bis 40 Sekunden, besonders bevorzugt 5 bis 30 Sekunden, zu bestimmen, und daraus anhand der Tabelle, des mathematischen Modells oder der Umrechnungsformel den Anteil des chemischen Inhaltsstoffs, insbesondere den Nitratwert, zu bestimmen.

In einer weiteren, insgesamt zweckmäßigen Ausführung ist die Steuereinrichtung dazu eingerichtet ist, das Fluidsystem in Abhängigkeit des erfassten oder bestimmten Anteils des chemischen Inhaltsstoffs, bevorzugt Nitratgehalts oder Nitritgehalts, steuern. Dadurch kann auf einfache Weise die Zubereitung eines Getränks verweigert werden, wenn die ermittelte Qualität des zugeführten Wassers Mängel aufweist.

In einer insgesamt vorteilhaften Ausführung des Getränkebereiters ist die Steuereinrichtung dazu eingerichtet oder programmiert, an oder zu vorbestimmten Zeiten die Aktoren derart zu aktivieren, um eine Spülung des Strömungsleitungssystems durchzuführen, wobei die Erfassung des chemischen Inhaltsstoffs bzw. Bewertung des Keimgehaltes unmittelbar nach Beenden der Spülung durchzuführen. Dadurch wird sichergestellt, dass sich in der Zuführleitung frisches Wasser aus der Wasserquelle, insbesondere aus dem Wassertank, befindet. Dieses Wasser aus der Quelle wird nun mit der vorstehend beschriebenen Messmethode analysiert. Wenn eine Verkeimung festgestellt wird, so resultiert diese aus dem Wasser, welches sich in der Wasserquelle bzw. im Wassertank befindet. Wenn in der Zuführleitung eine Verkeimung stattgefunden hat, die aufgrund der Spülung beseitigt wurde, so wird mittels der besagten Methode festgestellt, dass im Tank keine Verkeimung vorliegt und die Getränke gefahrlos zubereitet werden können. Die Spülung findet zweckmäßigerweise nach dem Einschalten des Getränkebereiters oder einmal am Tag, morgens vor dem ersten Getränkebezug statt.

In einer insgesamt zweckmäßigen Ausführung umfasst der Getränkebereiter eine Bedienund Anzeigevorrichtung, die mit der Steuereinrichtung in Verbindung steht und zur Bereitstellung von Benutzereingaben und Informationsausgaben ausgebildet ist.

Die Steuereinrichtung ist dazu eingerichtet ist, eine Information auf der Anzeigevorrichtung auszugeben, wenn der ermittelte Gehalt des chemischen Inhaltsstoffs, insbesondere der Nitritgehalt, einen Grenzwert überschreitet. Als Informationsausgaben können dabei bevorzugt Angaben für den Frischezustand des Wassers oder Anweisungen an den Benutzer, ob er den Wassertank mit frischem Wasser befüllen und/oder den Wassertank reinigen soll.

In einer bevorzugten Weiterbildung ist die Steuereinrichtung und die Bedien- und Anzeigevorrichtung dazu eingerichtet, die Ausgabe der Information in zumindest drei Stufen bereitzustellen, wobei die erste Stufe eine Zulässigkeitsbestätigung, die zweite Stufe Warnhinweis für beginnende Verkeimung und die dritte Stufe ein Verbortshinweis für die weitere Verwendung des in der Quelle vorhandenen Wassers. Damit wird dem Benutzer eine beginnende Nichteignung des Wassers mitgeteilt, wenn unmittelbar noch keine Qualitätseinbußen zu erwarten sind, das Wasser jedoch für eine längere Betriebszeit ungeeignet ist. Hier kann der Benutzer frühzeitig das Wasser erneuern, um für die nachfolgende Betriebszeit eine hohe Getränkequalität zu erreichen.

Zweckmäßigerweise ist die stufige Anzeige derart ausgebildet, dass bei einer Keimzahl bis 100 KbE / ml das Wasser als verwertbar angegeben wird. Ab einer Keimzahl größer 100 KbE / ml bis 500 KbE / ml wird ein Warnhinweis ausgegeben, der besagt, dass das Wasser kurzfristig verwendet werden kann, jedoch eine erhöhte Verkeimung bevorsteht. Ab einer Keimzahl größer 500 KbE/ml erfolgt eine Warnmeldung, die den Benutzer auffordert, das Wasser zu wechseln und den Tank auszuspülen. In einer Weiterbildung kann eine weitere Warnstufe verwendet werden, die ab einer Keimzahl größer 1000 KbE/ml darüber hinaus eine umfassende Reinigung des Strömungsleitungssystems anfordert oder gegebenenfalls selbständig durchführt, wenn das Strömungsleitungssystem mit entsprechenden Komponenten dazu eingerichtet ist.

In einer insgesamt vorteilhaften Ausführung ist der Getränkebereiter als Einbaugerät zum Einbau in einem Schrank ausgebildet mit einer am oder im Korpus eingefügten, von außen zugängliche Nische mit zumindest einer Begrenzungswand, wobei die Auslaufvorrichtung innerhalb der Nische relativ zu dem Korpus und zu dem Getränkebehälterabstellabschnitt bewegbar ausgeführt ist. Der Wassertank ist hinter der Frontwand, bevorzugt als Tür ausgebildeten Frontwand angeordnet, wobei das Sensormittel an der Kopplungsstelle des Tanks oder in der Leitung in Tanknähe angeordnet ist.

Ein Ausführungsbeispiel der Erfindung ist in den Zeichnungen rein schematisch dargestellt und wird nachfolgend näher beschrieben. Es zeigen
- Fig. 1:: einen Getränkebereiter in einer teilweise schematischen Frontansicht;
- Fig. 2:: das Strömungsleitungssystem in schematischer Ansicht;
- Fig. 3:: ein Detail des Strömungsleitungssystems mit Sensorvorrichtung zur Bestimmung der Wasserqualität;
- Fig. 4:: die Sensorvorrichtung skizziert in einer bevorzugten Ausführung und
- Fig. 5:: ein Diagramm zum Betrieb der Sensorvorrichtung.

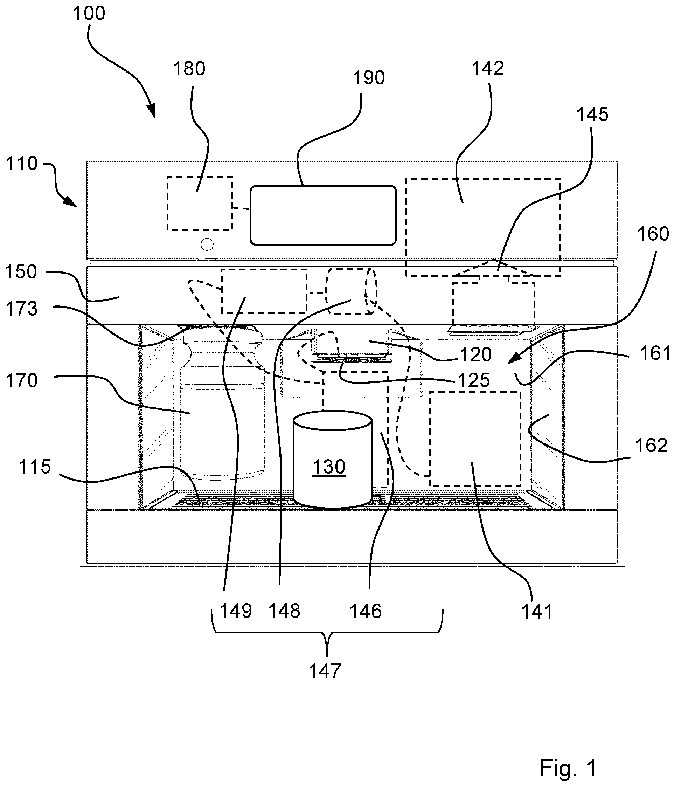

Fig. 1 zeigt eine perspektivische Darstellung einer Heißgetränkemaschine 100 gemäß einem Ausführungsbeispiel. Dabei ist die Heißgetränkemaschine 100 als ein Kaffeevollautomat, in dem dargestellten Beispiel als ein Einbau-Kaffeevollautomat ausgeführt. Die Heißgetränkemaschine 100 weist einen Korpus 110 auf, innerhalb des Korpus sind die Komponenten zum Zubereiten des Heißgetränks untergebracht. Diese sind, schematisch skizziert, die Vorratsbehälter 141 für Wasser und für Kaffeebohnen 142, ein Mahlwerk 145, die Brüheinheit 146 und das Strömungsleitungssystem147 mit Pumpe 148, Durchlauferhitzer 149 und Sensoren zur Messung von Wassertemperatur und/oder Durchflussmenge. Die Heißgetränkemaschine 100 besitzt ferner eine Bedien- und Anzeigevorrichtung 190 zur Eingabe der Benutzerwünsche, die mit einer Steuereinrichtung 180 in Verbindung steht zum Steuern der Komponenten zum Zubereiten des gewünschten Heißgetränks und einen Getränkebehälterabstellabschnitt oder eine Abstellfläche 115 auf. Dabei ist der Getränkebehälterabstellabschnitt 115 als eingeformte oder anders hergestellte Nische 160 in der frontseitigen Tür 150 zum Verschließen des Inneren des Korpus 110 bereitgestellt. Der Getränkebehälterabstellabschnitt 115 ist zum Abstellen von Getränkebehältern 130, beispielsweise Kaffeetassen, ausgebildet.

Ferner weist die Heißgetränkemaschine 100 eine Auslaufvorrichtung 120 mit Auslaufdüsen 125 auf. Die Auslaufvorrichtung 120 ist in einer bevorzugten Ausführung relativ zu dem Korpus 110 bzw. relativ zu dem Getränkebehälterabstellabschnitt 115 bewegbar ausgeführt. Dabei ist die Auslaufvorrichtung 120 in einer in Figur 1 dargestellten Betriebsposition der Heißgetränkemaschine 100 oberhalb des Getränkebehälterabstellabschnittes 115 angeordnet. Die Auslaufvorrichtung 120 ist zu dem Getränkebehälterabstellabschnitt 115 hin und von dem Getränkebehälterabstellabschnitt 115 weg verfahrbar, beispielsweise manuell betätigt oder durch eine Antriebseinrichtung in dem Korpus 110. Die Auslaufvorrichtung 120 ist insgesamt dazu ausgebildet, zumindest einen Getränkebehälter 130 zu Befüllen.

Der Abstellabschnitt 115 befindet sich in der Nische 160, die durch zwei gegenüberliegende Seitenwände 162 und der dem Korpus 110 zugewandten Rückwand 161 begrenzt ist. Die Nische 160 befindet sich in der Tür 150, sodass die begrenzenden Wände 161, 162 und die Abstellfläche 115 mit bewegt werden, wenn die Tür 150 aufgeschwenkt wird.

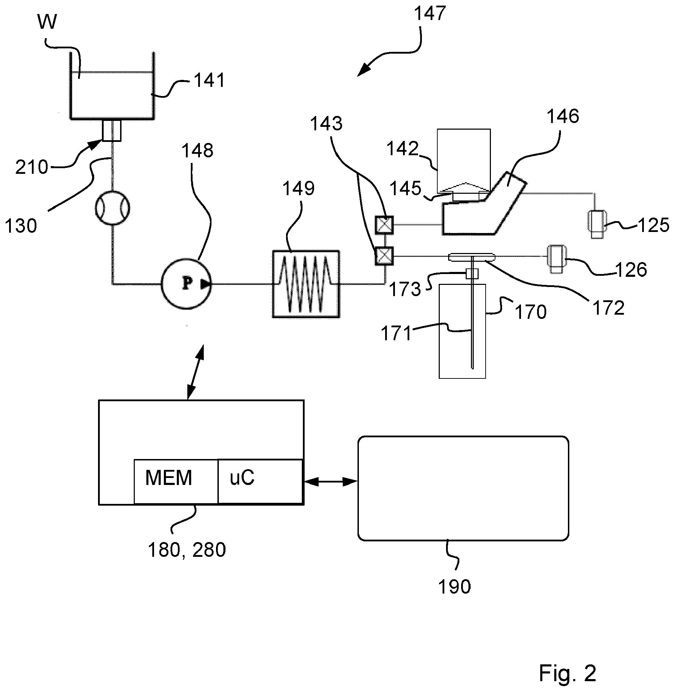

Fig. 2 zeigt ein schematisches Blockschaltbild des Strömungsleitungssystems 140 mit der Steuerung 180, 190 eines Getränkeautomaten 100 gemäß einem Ausführungsbeispiel. Die hier dargestellte Anordnung kann in dem in Figur 1 beschriebenen Getränkeautomat 100 eingesetzt sein.

Der Getränkeautomat 100 weist einen Flüssigkeitsspeicher 141 auf, der ausgebildet ist, um Flüssigkeit 202, beispielsweise Wasser W, zu speichern. Das Wasser W wird sowohl für eine Getränkebereitung als auch für das Erzeugen von Dampf zum Ansaugen und Aufschäumen der in dem Flüssigkeitsvorrat 170 bevorrateten weiteren Flüssigkeit, bevorzugt Milch, verwendet.

Dazu ist der Flüssigkeitsspeicher 141 über eine Leitung 130 mit einer Pumpeinrichtung 148 verbunden, die auch als Pumpe bezeichnet wird. Die Pumpeinrichtung 148 ist ausgebildet, um die Flüssigkeit W zu einer Heizeinrichtung 149 zu pumpen, in der die Flüssigkeit W erhitzt wird und gegebenenfalls Dampf erzeugt wird. Die von der Heizeinrichtung 149 erhitzte Flüssigkeit W kann zum einen in flüssiger oder dampfförmiger Form zu einer Brüheinheit 147 des Getränkeautomaten 100 geführt werden, um beispielsweise ein Kaffeegetränk zuzubereiten, das anschließend durch die Auslassdüse 125 ausgegeben wird. Zusätzlich kann der von der Heizeinrichtung 149 erzeugte Dampf zu einer Mischkammer 172 bzw. Aufschäumeinrichtung des Getränkeautomaten 100 geführt werden. Die Aufschäumeinrichtung 172 ist dabei ausgebildet, um die weitere Flüssigkeit, beispielsweise Milch, aus dem Flüssigkeitsvorrat 170 unter Verwendung des Dampfes anzusaugen und aufzuschäumen und zur Auslassdüse 126 zu führen. Dazu wird die weitere Flüssigkeit aus dem Flüssigkeitsvorrat 170 über die Zuführleitung 171 in die Mischkammer 172 zugeführt. Durch den in die Mischkammer 172 gelangenden Dampf erhitzt sich die Mischkammer 172.

In einer bevorzugten Ausführung ist in der Leitung, die der Heizeinrichtung 149 nachgeschaltet ist, eine Ventilvorrichtung 143 angeordnet, um wahlweise die Strömungswege des erhitzten Wassers zur Brüheinheit 147 oder zur Mischkammer 172 zu leiten. Die Ventilvorrichtung 143 ist ferner derart ausgeführt, dass sie den Durchlass zur Mischkammer 172 freigeben oder sperren kann. Das Ansaugrohr 171 ist mittels einer Koppelvorrichtung 173 an der Mischkammer 172 bevorzugt lösbar angeschlossen.

Zu erkennen ist ferner, dass die Verbindungsleitung 130 in unmittelbarer Nähe zum Tank 141 mit einem Sensormittel 210 versehen ist, welches der Sensorvorrichtung 200 zur Erkennung der Wasserqualität zugeordnet ist. Das Sensormittel 210 umfasst weitere Komponenten, um elektrische Eigenschaften, wie Leitwert, Impedanz oder Kapazität, direkt zu messen, wobei die Auswerteeinrichtung 280 aus den gemessenen Werten den Anteil eines chemischen Inhaltsstoffs, beispielsweise Nitrit oder Nitrat, der Flüssigkeit ermittelt oder berechnet.

Die Steuereinrichtung 180 umfasst einen Mikrocontroller uC mit einem entsprechend zugeordneten Speicher MEM als Programm- und Datenspeicher. Die Steuereinrichtung 180 steht mit der Bedien- und Anzeigevorrichtung 190 in Datenverbindung, um Benutzereingaben aufgrund Bedienhandlungen zu empfangen und Informationen und Warnhinweise an den Benutzer auszugeben. Die Bedien- und Anzeigevorrichtung 190 umfasst bevorzugt ein Display, um Informationen verständlich in Textform oder grafisch an den Benutzer auszugeben. Das Display kann bevorzugt als Berührbildschirm 190 ausgebildet sein, die eine besonders komfortable und vielseitige Bedienung bereitstellt.

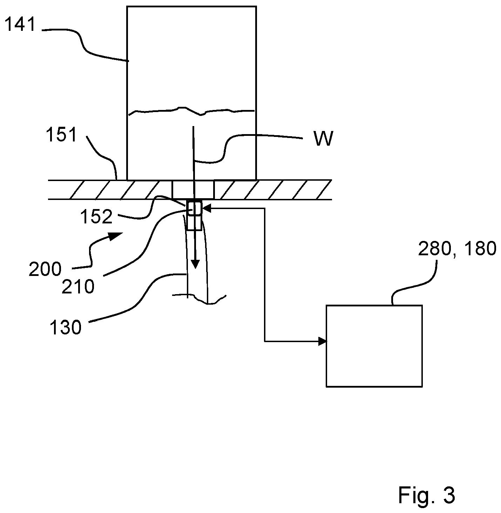

Fig. 3 zeigt schematisch den Kupplungsbereich des Wassertanks 141 im Detail. Der Wassertank 141 ist im Gerätegehäuse 110 herausnehmbar eingesetzt, wobei im Aufnahmebereich eine bodenseitige Gehäusewand 151 vorhanden ist. Diese wird vom Auslassstutzen 152 durchdrungen, wobei der Auslassstutzen 152 die Verbindung zur Zuführleitung 130 bereitstellt. In dem dargestellten Beispiel ist die Leitung 130 ein Schlauch, wobei der Leitungsanfang über den Stutzen 152 gestülpt ist und die Fluidverbindung zu den weiteren Komponenten des Strömungsleitungssystems 147 bereitstellt. Im Stutzen 152 ist das Sensormittel 210 angeordnet.

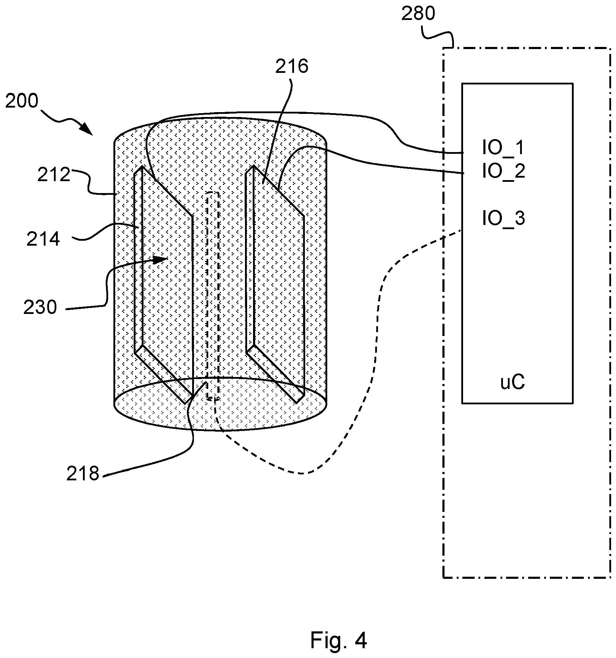

Fig. 4 zeigt die Sensorvorrichtung 200 in einer ersten Ausführung. Das Sensormittel 210 umfasst einen Träger 212 oder einen Trägerhohlkörper, an dem zwei Platten 214, 216 parallel beabstandet zueinander angebracht sind. Ferner ist eine weitere Sonde 218 im Raum zwischen den Platten 214, 216 angebracht. Die Sonde 218 dient als Elektrode, um elektrische Eigenschaften der Flüssigkeit W zu messen, die sich im Raum 230 zwischen den beiden Platten 214, 216 befindet. Die Platten 214, 216 sind am Auslassstutzen 152 des Wassertanks 141 bzw. am Anfang des Zuführrohres 130 angebracht, wobei die Platten 214, 216 senkrecht zum Querschnitt der Rohröffnung oder Öffnung des Auslassstutzens 152 angeordnet sind. Der Abstand bzw. der Raum 230 zwischen den beiden Platten 214, 216 stellt den Reaktorraum für die elektrolytische Behandlung des Wassers bereit.

Die Platten 214, 216 der aktiven Elektroden signaltechnisch mit dem Auswertemittel 280 verbunden. Das Auswertemittel 280 umfasst einen Mikrocontroller uC bzw. ist einem solchen zugeordnet. Die Elektroden 241, 214 sind jeweils mit Ports IO1, IO2 des Mikrocontrollers uC verbunden, wobei der Mikrocontroller uC die besagten Ports so schalten kann, dass eine Spannung an den Platten 214, 216 anliegt. Die Elektrode 218 ist mit einem weiteren Port IO3 verbunden, der die Spannung zwischen der Messelektrode 218 und der Bezugselektrode, die von einer der aktiven Elektroden 214, 216 bereitgestellt wird. Die elektrische Eigenschaft wird vom Port IO_3 empfangen und zu einem digitalen Wert gewandelt, der wiederrum der Steuereinrichtung 180 zugeführt werden kann zur weiteren Bearbeitung. Das Auswertemittel 280 kann auch als Teil der Steuereinrichtung 180 implementiert sein bzw. die Steuereinrichtung 180 kann dazu ausgebildet sein, ein Teil der Aufgaben oder alle Aufgaben des Auswertemittels 280 zu übernehmen. Dies gilt für alle Ausführungen der Erfindung.

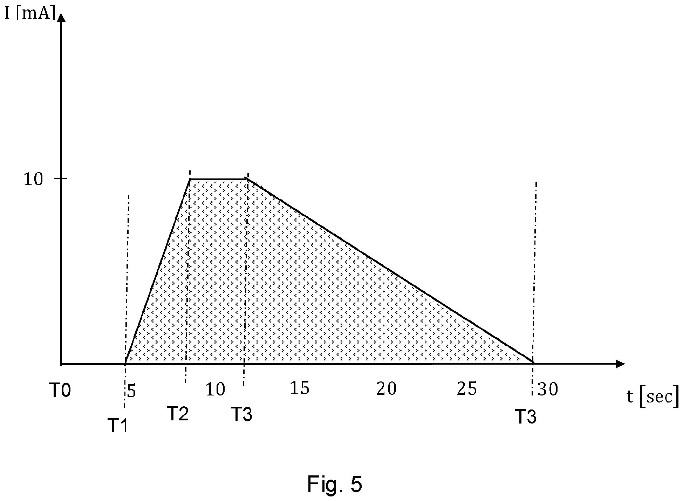

Fig. 5 ist ein Diagramm, in dem die Reaktion in der Messzelle bzw. der Reaktorkammer 230 dargestellt ist. Die zeitlichen Phasen stellen sich wie folgt dar:
Das Gerät 100 wird eingeschaltet, ab dem Zeitpunkt T0 läuft die Einschaltspülung, bis zum Zeitpunkt T1. Ab dem Zeitpunkt T1, also nach ca. 5 Sekunden nach dem Einschalten des Gerätes 100 ist die Einschaltspülung beendet, während das Gerät vorbereitende Maßnahmen zur Getränkezubereitung durchführt, beispielsweise mahlt. In dieser Zeit wird die Sensorvorrichtung aktiviert, derart, dass eine konstante Spannung mit einem Wert im Bereich von 0,1V bis 5V, bevorzugt 0,1V bis 1V, besonders bevorzugt 0,2V bis 0,5V an die aktiven Elektroden 214, 218 angelegt wird, um eine elektrolytische Reaktion im Wasser zu verursachen, wenn sich die chemische Zusatzsubstanz, beispielsweise Nitrit, darin befindet. Zu erkennen ist, dass bis zum Zeitpunkt T2 ein steiler Anstieg der Umwandlung in die zweite chemische Substanz stattfindet, der ab T2 einen konstanten Wert aufweist und ab dem Zeitpunkt T3 wieder absinkt. Das Absinken bedeutet dabei, dass die Umwandlungsgeschwindigkeit absinkt, also die Umwandlung zur zweiten chemischen Substanz, hier Nitrat, schreitet langsamer fort. Zum Zeitpunkt T4 ist die Umwandlung und die Messung abgeschlossen. Die Konzentration der sogenannten zweiten chemischen Substanz, hier Nitrat, kann anhand der elektrischen Eigenschaften, wie Impedanz oder Leitwert, mittels der Messelektrode 218 erfasst werden. Das Integral der skizzierten Kurve ist ein Maß für den Nitritgehalt. Die an die aktiven Elektroden 214, 218 angelegte Spannung kann in einer bevorzugten Ausführung in Abhängigkeit der Leitfähigkeit des Wassers eingestellt werden.

Insgesamt dauert die Messung in besonders bevorzugter Ausführung ca. 30 sec. Die Auswertung der erfassten elektrischen Eigenschaft und das zeitliche Verhalten dazu erfolgt mittels des Auswertemittels 280, das Bestandteil der Steuereinrichtung 180 sein kann.

Das Messverfahren zur Fig. 5 wird wie folgt erläutert:
Nitrit ist ein Stoffwechselprodukt vieler Keime. Zur Bestimmung müssen die Nitritionen elektrochemisch zum Nitrat oxidiert werden. Zur Oxydation des Nitrits der Keime zu Nitrat ist ein definiertes Potential, beispielsweise 0,1V bis 5V, bevorzugt 0,1V bis 1V, besonders bevorzugt 0,2V bis 0,5V, notwendig.

An die Elektroden wird dieses definierte Potential über das Auswertemittel des Kaffeevollautomaten eingestellt, wodurch die Reaktion der Umwandlung des Nitrits in Nitrat beginnt.

Während der Reaktion wird die Stromstärke über der Zeit gemessen. Die Fläche unter der Kurve ist proportional zur Nitritkonzentration.

Der Kalibrierfaktor wird mit der Fläche multipliziert. Das Produkt ist gleich der Konzentration des Nitrits und ist damit ein Maß für die Keimzahl. Der Kalibrierfaktor kann im Umfeld von Laboruntersuchungen ermittelt werden, wobei dieser als Programmbestandteil oder Tabelle in das Auswertemittel 280 implementiert wird.

Die Richtungs- und Positionsangaben für alle Ausführungen beziehen sich auf die betriebsgemäße Position des Getränkebereiters 100.

## Patentansprüche

1. Getränkebereiter (100), umfassend
- einen Korpus (110);
- ein im Korpus (110) angeordnetes Fluidsystem (147), welches folgende Komponenten umfasst:
- eine Wasserquelle (141), beispielsweise einen Tank, und eine Zuführleitung (130) zum Zuführen des Wasser (W) in das Fluidsystem (147);
- eine Brühvorrichtung (146) zur Aufnahme einer Trockensubstanz, welche zur Zubereitung des Getränks mit dem Wasser (W) durchströmt werden kann;
- eine Auslassvorrichtung (120, 125, 126) zur Ausgabe des zubereiteten Getränks; wobei der Getränkebereiter (100) eine Steuereinrichtung (180) zur Steuerung des Fluidsystems (147) zur Zubereitung eines Getränks;
- eine Sensorvorrichtung (200), welche ein elektrochemischer Sensor ist oder einen solchen umfasst, mit einem Sensormittel (210) und ein Auswertemittel (280), wobei die Sensorvorrichtung (200) dazu eingerichtet ist, einen chemischen Inhaltsstoff, im Wasser (W) zu erfassen, wobei die Steuereinrichtung (180) mit der Sensorvorrichtung (200) in Verbindung steht,
**dadurch gekennzeichnet,**
**dass** das Sensormittel (210) in der Zuführleitung (130) in räumlicher Nähe, bevorzugt in unmittelbarer Nähe zur Wasserquelle (141) angeordnet ist, um das in der Wasserquelle (141) bevorratete Wasser hinsichtlich des chemischen Inhaltsstoffes, welcher aufgrund von Verkeimungen entsteht, zu überwachen.

2. Getränkebereiter nach Anspruch 1,
**dadurch gekennzeichnet,**
**dass** das Sensormittel (210) eine Messkammer (230) mit zumindest eine Elektrode (218) zur Messung einer elektrischen Eigenschaft des Wassers (W), bevorzugt den Leitwert, Impedanz oder die elektrische Stromstärke zwischen der Elektrode (218) und einem Bezugspotential (216), besitzt, wobei das Auswertemittel (280) dazu ausgebildet ist, den chemischen Inhaltsstoff anhand der gemessenen elektrischen Eigenschaft zu bestimmen und der Steuereinrichtung (180) zu übermitteln.

3. Getränkebereiter nach Anspruch 2,
**dadurch gekennzeichnet,**
**dass** das Sensormittel (210) innerhalb der Messkammer (230) zumindest zwei aktive Elektroden (214, 216) zur Bereitstellung eines elektrischen Stromes (I) durch die Flüssigkeit (W), um eine chemische Umwandlung des chemischen Inhaltsstoffs im Wasser (W) bewirken zu können.

4. Getränkebereiter nach Anspruch 3,
**dadurch gekennzeichnet,**
**dass** das Auswertemittel (280) dazu eingerichtet ist, für eine erste vorbestimmte Zeit (T1, T2, T3, T4) die aktiven Elektroden (214, 218) zu aktivieren, um eine chemische Umwandlung des chemischen Inhaltsstoffs zu bewirken, und die elektrische Eigenschaft des Wassers (W) während oder nach der chemischen Umwandlung zu erfassen.

5. Getränkebereiter nach Anspruch 3 oder 4,
wobei die aktiven Elektroden (214, 216) zur Bereitstellung des elektrischen Stromes (I) zwischen den Elektroden (214, 216) aus Platten bestehen, die beabstandet zueinander in der Messkammer (230) angeordnet sind und wobei die Messelektrode (218) im Raum zwischen den beiden aktiven Elektroden (214, 216) angeordnet ist.

6. Getränkebereiter nach Anspruch 5,
**dadurch gekennzeichnet,**
**dass** die Platten (214, 216) parallel beabstandet zueinander angeordnet sind.

7. Getränkebereiter nach Anspruch 5,
**dadurch gekennzeichnet,**
**dass** das Sensormittel (210) als rohrförmiger Hohlkörper (212) mit segmentierten Mantel ausgebildet ist, wobei zumindest zwei Segmente (214, 216) als aktive Elektroden und bevorzugt zumindest ein Segment (218) als Messelektrode fungieren.

8. Getränkebereiter nach Anspruch einem der Ansprüche 1 bis 7,
**dadurch gekennzeichnet,**
**dass** die Sensorvorrichtung (200) dazu eingerichtet ist, den Nitritgehalt im Wasser (W) zu bestimmen.

9. Getränkebereiter nach einem der Ansprüche 2 bis 8, wobei das Auswertemittel (280) dazu eingerichtet ist, die Aktor-Elektroden (214, 216) für eine vorbestimmte Dauer, bevorzugt 1 bis 60 Sekunden, bevorzugt 5 bis 40 Sekunden, besonders bevorzugt 5 bis 30 Sekunden, zu aktivieren, um Nitrit in Nitrat umzuwandeln, um mittels der Messelektrode (218) die elektrische Eigenschaft des nitrithaltigen Wassers (W) zu erfassen.

10. Getränkebereiter nach einem der Ansprüche 2 bis 9,
**dadurch gekennzeichnet,**
**dass** das Auswertemittel (280) eine Tabelle, Mathematisches Modell oder eine Umrechnungsformel umfasst zur Bestimmung des Gehalts des chemischen Inhaltsstoffs, bevorzugt des Nitratwertes, basierend auf der vom Sensormittels (210) erfassten elektrischen Eigenschaft.

11. Getränkebereiter nach einem der Ansprüche 1 bis 10,
**dadurch gekennzeichnet**
**dass** das Auswertemittel (280) dazu eingerichtet ist, die Dynamik, also Größe der Veränderung der elektrischen Größe innerhalb einer vorbestimmten Dauer, bevorzugt 1 bis 60 Sekunden, ferner bevorzugt 5 bis 40 Sekunden, besonders bevorzugt 5 bis 30 Sekunden, zu bestimmen, und daraus anhand der Tabelle, des Mathematischen Modells oder der Umrechnungsformel den Anteil des chemischen Inhaltsstoffs, insbesondere den Nitritwert, zu bestimmen.

12. Getränkebereiter nach einem der Ansprüche 1 bis 11,
**dadurch gekennzeichnet,**
**dass** die Steuereinrichtung (180) dazu eingerichtet ist, das Fluidsystem (147) in Abhängigkeit des erfassten oder bestimmten Anteil des chemischen Inhaltsstoffs, bevorzugt Nitritgehalts, steuern.

13. Getränkebereiter nach Anspruch einem der Ansprüche 1 bis 12, wobei die Steuereinrichtung dazu eingerichtet ist, an vorbestimmten Zeiten (T0) die Aktoren (143, 146, 148, 149) derart zu aktivieren, um eine Spülung des Strömungsleitungssystems (147) durchzuführen, und die Erfassung des chemischen Inhaltsstoffs bzw. Bewertung des Keimgehaltes unmittelbar nach Beenden der Spülung (T1) durchzuführen.

14. Getränkebereiter nach einem der Ansprüche 1 bis 13,
ferner umfassend eine Bedien- und Anzeigevorrichtung (190), die mit der Steuereinrichtung (180) in Verbindung steht und zur Bereitstellung von Benutzereingaben und Informationsausgaben ausgebildet ist,
**dadurch gekennzeichnet,**
**dass** die Steuereinrichtung (180) dazu eingerichtet ist, eine Information auf der Anzeigevorrichtung auszugeben, wenn der ermittelte Gehalt des chemischen Inhaltsstoffs, insbesondere der Nitritgehalt, einen Grenzwert überschreitet.

15. Getränkebereiter nach Anspruch 14,
**dadurch gekennzeichnet,**
**dass** die Steuereinrichtung (180) und die Bedien- und Anzeigevorrichtung (190) dazu eingerichtet ist, die Ausgabe der Information in zumindest drei Stufen bereitzustellen, wobei die erste Stufe eine Zulässigkeitsbestätigung, die zweite Stufe Warnhinweis für beginnende Verkeimung und die dritte Stufe ein Verbortshinweis für die weitere Verwendung des in der Quelle vorhandenen Wassers.

## Claims

1. Beverage preparation means (100), comprising
- a carcass (110);
- a fluid system (147) arranged in the carcass (110), which comprises the following components:
- a water source (141), for example a reservoir, and a supply line (130) for supplying the water (W) to the fluid system (147);
- a brewing device (146) for receiving a dry substance, through which the water (W) can flow to prepare the beverage;
- an outlet device (120, 125, 126) for dispensing the prepared beverage; the beverage preparation means (100) a control device (180) for controlling the fluid system (147) for preparing a beverage;
- a sensor device (200), which is or comprises an electrochemical sensor, having a sensor means (210) and an evaluation means (280), the sensor device (200) being designed to detect a chemical substance in the water (W), the control device (180) being connected to the sensor device (200),
**characterised in that**
the sensor means (210) is arranged in the supply line (130) in close proximity, preferably in the immediate proximity of the water source (141), in order to monitor the water stored in the water source (141) in terms of the chemical substance, which arises as a result of contamination.

2. Beverage preparation means according to claim 1,
**characterised in that**
the sensor means (210) has a measuring chamber (230) having at least one electrode (218) for measuring an electrical property of the water (W), preferably the conductance, impedance or the electrical current between the electrode (218) and a reference potential (216), the evaluation means (280) being designed to determine the chemical substance on the basis of the measured electrical property and to transmit it to the control device (180).

3. Beverage preparation means according to claim 2,
**characterised in that**
the sensor means (210) within the measuring chamber (230) at least two active electrodes (214, 216) for providing an electric current (I) through the fluid (W) in order to be able to effect a chemical conversion of the chemical substance in the water (W).

4. Beverage preparation means according to claim 3,
**characterised in that**
the evaluation means (280) is designed to activate the active electrodes (214, 218) for a first predetermined period of time (T1, T2, T3, T4) in order to effect a chemical conversion of the chemical substance, and to detect the electrical property of the water (W) during or after the chemical conversion.

5. Beverage preparation means according to either claim 3 or claim 4,
wherein the active electrodes (214, 216) for providing the electric current (I) between the electrodes (214, 216) consist of plates which are arranged at a distance from one another in the measuring chamber (230), and wherein the measuring electrode (218) is arranged in the space between the two active electrodes (214, 216).

6. Beverage preparation means according to claim 5,
**characterised in that**
the plates (214, 216) are arranged in parallel with one another at a distance.

7. Beverage preparation means according to claim 5,
**characterised in that**
the sensor means (210) is designed as a tubular hollow body (212) having a segmented casing, at least two segments (214, 216) acting as active electrodes and preferably at least one segment (218) acting as a measuring electrode.

8. Beverage preparation means according to any of claims 1 to 7,
**characterised in that**
the sensor device (200) designed to determine the nitrite content in the water (W).

9. Beverage preparation means according to any of claims 2 to 8, wherein the evaluation means (280) is designed to activate the actuator electrodes (214, 216) for a predetermined duration, preferably 1 to 60 seconds, preferably 5 to 40 seconds, particularly preferably 5 to 30 seconds, to convert nitrite into nitrate in order to detect the electrical property of the nitrite-containing water (W) by means of the measuring electrode (218).

10. Beverage preparation means according to any of claims 2 to 9,
**characterised in that**
the evaluation means (280) comprises a table, mathematical model or conversion formula for determining the content of the chemical substance, preferably the nitrate value, on the basis of the electrical property detected by the sensor means (210).

11. Beverage preparation means according to any of claims 1 to 10,
**characterised in that**
the evaluation means (280) is designed to determine the dynamics, i.e. the magnitude of the change in the electrical variable within a predetermined duration, preferably 1 to 60 seconds, more preferably 5 to 40 seconds, particularly preferably 5 to 30 seconds, and to determine therefrom the proportion of the chemical substance, in particular the nitrite value, on the basis of the table, the mathematical model or the conversion formula.

12. Beverage preparation means according to any of claims 1 to 11,
**characterised in that**
the control device (180) is designed to control the fluid system (147) according to the detected or determined proportion of the chemical substance, preferably nitrite content.

13. Beverage preparation means according to any of claims 1 to 12, wherein the control device is designed to activate the actuators (143, 146, 148, 149) at predetermined times (T0) in such a way as to carry out a rinsing of the flow line system (147), and to carry out the detection of the chemical substance or evaluation of the contamination content immediately after the end of the rinsing (T1).

14. Beverage preparation means according to any of claims 1 to 13,
further comprising an operating and display device (190), which is connected to the control device (180) and is designed to provide user inputs and information outputs,
**characterised in that**
the control device (180) is designed to output information on the display device when the determined proportion of the chemical substance, in particular of the nitrite content, exceeds a threshold value.

15. Beverage preparation means according to claim 14,
**characterised in that**
the control device (180) and the operating and display device (190) are designed to provide the output of the information in at least three stages, the first stage being a confirmation of admissibility, the second stage being a warning of the onset of contamination and the third stage being a prohibition warning for the further use of the water present in the source.

## Revendications

1. Agencement de préparation de boissons (100), comprenant
- un corps (110) ;
- un système de fluide (147) disposé dans le corps (110), lequel système de fluide comprend les composants suivants :
- une source d'eau (141), par exemple un réservoir, et une conduite d'amenée (130) pour l'amenée de l'eau (W) dans le système de fluide (147) ;
- un dispositif d'infusion (146) destiné à recevoir une matière sèche qui peut être traversée par l'eau (W) pour la préparation de la boisson ;
- un dispositif de sortie (120, 125, 126) pour la sortie de la boisson préparée ; dans lequel l'agencement de préparation de boissons (100) un appareil de commande (180) destiné à commander le système de fluide (147) pour la préparation d'une boisson ;
- un dispositif formant capteur (200), lequel est un capteur électrochimique ou comporte un tel capteur, comportant un moyen formant capteur (210) et un moyen d'évaluation (280), dans lequel le dispositif formant capteur (200) est conçu pour détecter la présence d'une substance chimique dans l'eau (W), dans lequel l'appareil de commande (180) est en liaison avec le dispositif formant capteur (200),
**caractérisé en ce**
**que** le moyen formant capteur (210) est disposé dans la conduite d'amenée (130) à proximité spatiale, de préférence à proximité immédiate, de la source d'eau (141), pour surveiller la présence de la substance chimique dans l'eau stockée dans la source d'eau (141), laquelle substance chimique provient d'agents pathogènes.

2. Agencement de préparation de boissons selon la revendication 1,
**caractérisé en ce**
**que** le moyen formant capteur (210) possède une enceinte de mesure (230) comportant au moins une électrode (218) destinée à mesurer une propriété électrique de l'eau (W), de préférence la conductivité, l'impédance ou l'intensité de courant électrique entre l'électrode (218) et un potentiel de référence (216), dans lequel le moyen d'évaluation (280) est conçu pour déterminer la substance chimique à partir de la propriété électrique mesurée et pour la transmettre à l'appareil de commande (180).

3. Agencement de préparation de boissons selon la revendication 2,
**caractérisé en ce**
**que** le moyen formant capteur (210) au moins deux électrodes actives (214, 216) à l'intérieur de l'enceinte de mesure (230), lesquelles électrodes actives sont destinées à fournir un courant électrique (I) à travers le liquide (W), pour provoquer une transformation chimique de la substance chimique dans l'eau (W).

4. Agencement de préparation de boissons selon la revendication 3,
**caractérisé en ce**
**que** le moyen d'évaluation (280) est conçu pour activer les électrodes actives (214, 218) pendant une première période prédéterminée (T1, T2, T3, T4) afin de provoquer une transformation chimique de la substance chimique et de détecter la propriété électrique de l'eau (W) pendant ou après la transformation chimique.

5. Agencement de préparation de boissons selon la revendication 3 ou 4,
dans lequel les électrodes actives (214, 216) pour la fourniture du courant électrique (I) entre les électrodes (214, 216) sont constituées par des plaques, lesquelles sont disposées à distance l'une de l'autre dans l'enceinte de mesure (230), et dans lequel l'électrode de mesure (218) est disposée dans l'espace entre les deux électrodes actives (214, 216).

6. Agencement de préparation de boissons selon la revendication 5,
**caractérisé en ce**
**que** les plaques (214, 216) sont disposées à distance les unes des autres de manière parallèle.

7. Agencement de préparation de boissons selon la revendication 5,
**caractérisé en ce**
**que** le moyen formant capteur (210) est réalisé comme un corps creux tubulaire (212) comportant une enveloppe segmentée, dans lequel au moins deux segments (214, 216) servent d'électrodes actives et de préférence au moins un segment (218) sert d'électrode de mesure.

8. Agencement de préparation de boissons selon l'une des revendications 1 à 7,
**caractérisé en ce**
**que** le dispositif formant capteur (200) est conçu pour déterminer la teneur en nitrites dans l'eau (W).

9. Agencement de préparation de boissons selon l'une des revendications 2 à 8, dans lequel le moyen d'évaluation (280) est conçu pour activer les électrodes formant actionneurs (214, 216) pendant une durée prédéterminée, de préférence 1 à 60 secondes, de préférence 5 à 40 secondes, de manière particulièrement préférée 5 à 30 secondes, pour transformer les nitrites en nitrates, pour détecter la propriété électrique de l'eau (W) contenant des nitrites à l'aide de l'électrode de mesure (218).

10. Agencement de préparation de boissons selon l'une des revendications 2 à 9,
**caractérisé en ce**
**que** le moyen d'évaluation (280) comprend un tableau, un modèle mathématique ou une formule de conversion permettant de déterminer la teneur de la substance chimique, de préférence le taux de nitrates, sur la base de la propriété électrique détectée par le moyen formant capteur (210).

11. Agencement de préparation de boissons selon l'une des revendications 1 à 10,
**caractérisé en ce**
**que** le moyen d'évaluation (280) est conçu pour déterminer l'intensité, c'est-à-dire l'ampleur de la variation de la grandeur électrique pendant une durée prédéterminée, de préférence 1 à 60 secondes, de préférence en outre 5 à 40 secondes, de manière particulièrement préférée 5 à 30 secondes, et pour déterminer, à partir de celle-ci et du tableau, du modèle mathématique ou de la formule de conversion, la proportion de la substance chimique, en particulier le taux de nitrites.

12. Agencement de préparation de boissons selon l'une des revendications 1 à 11,
**caractérisé en ce**
**que** l'appareil de commande (180) est conçu pour commander le système de fluide (147) en fonction de la proportion détectée ou déterminée de la substance chimique, de préférence en fonction de la teneur en nitrites.

13. Agencement de préparation de boissons selon l'une des revendications 1 à 12, dans lequel l'appareil de commande est conçu pour activer les actionneurs (143, 146, 148, 149) à des instants prédéterminés (T0) pour effectuer un rinçage du système de conduites d'écoulement (147), et pour effectuer la détection de la substance chimique ou l'évaluation de la teneur en germes immédiatement à l'issue du rinçage (T1).

14. Agencement de préparation de boissons selon l'une des revendications 1 à 13,
comprenant en outre un dispositif de manipulation et d'affichage (190) qui est en liaison avec l'appareil de commande (180) et est réalisé pour mettre à disposition des entrées utilisateur et des émissions d'informations,
**caractérisé en ce**
**que** l'appareil de commande (180) est conçu pour émettre une information sur le dispositif d'affichage lorsque la teneur déterminée de la substance chimique, en particulier la teneur en nitrites, dépasse une valeur limite.

15. Agencement de préparation de boissons selon la revendication 14,
**caractérisé en ce**
**que** l'appareil de commande (180) et le dispositif de manipulation et d'affichage (190) sont conçus pour mettre à disposition l'émission de l'information en au moins trois étapes, dans lequel la première étape est une confirmation d'admissibilité, la deuxième étape est une indication d'avertissement pour le début de la prolifération des germes et la troisième étape est une indication d'interdiction de l'utilisation ultérieure de l'eau disponible dans la source.
